# EUROPEAN PATENT APPLICATION

(11) **EP 1 585 254 A2**
(43) Date of publication of application: **12.10.2005**
(21) Application number: 05007623.1
(22) Date of filing: 07.04.2005
(51) Int. Cl.: H04L 12/24

(54) **Method of synchronizing management information between a plurality of managing devices in a home network**

(30) Priority: 07.04.2004 KR 2004023785
(71) Applicant: LG ELECTRONICS INC., Seoul 150-010 (KR)
(72) Inventor: Lee, Sang Kyun, Gwangmyung-si Kyunggi-do, 423-060 (KR); Chung, Jong Hoon, Kyunggi-do, 435-751 (KR)
(74) Representative: Vetter, Ewald Otto

(57) **Abstract**

A method of communicating management information from a first managing device connected to a network is provided in accordance with another aspect. The method comprises updating a first profile based on a change in connection status of a device to the network; and transmitting the updated information about the first profile to at least a second managing device to update a second profile stored in the second managing device.

## Description

### BACKGROUND OF THE INVENTION

### Field of the Invention

The present invention relates to a home network system and a method of synchronizing management information therein and, more particularly, to a method of updating a management information database and automatically synchronizing the databases between managing devices on a network when an appliance is added to the network, removed from the network, or moved within the network.

### Description of the Related Art

Home network systems wherein a plurality of electronic appliances can be controlled in a centralized way through a network are being installed in homes and buildings. If a home network is established in a house, a particular appliance can be monitored and controlled through the network at any place within the house. If a power line communication or a wireless communication is adopted as a network communication means, a home network can be easily established with no additional cost for cabling.

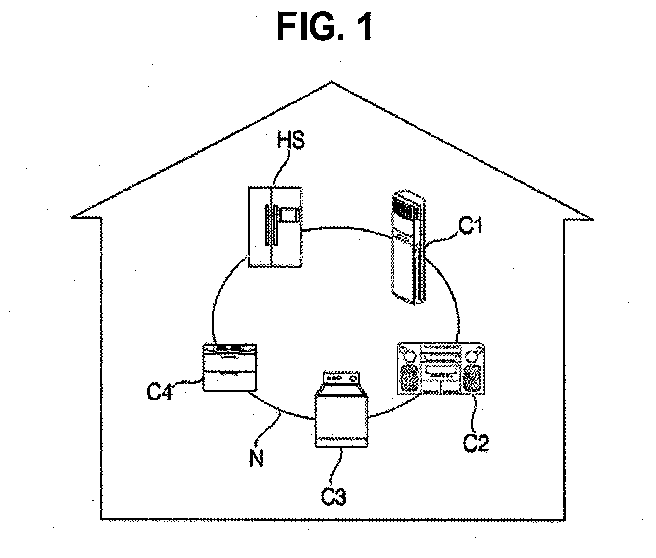

FIG. 1 illustrates a typical home network system wherein a plurality of electronic appliances, C1 through C4, are connected to a network N established in a house. A home server monitors the status of the appliances and controls the appliances in a centralized way. The administrator of the home network system can control the plurality of electronic appliances connected to the network N in a centralized way by transmitting control commands to the plurality of electronic appliances and receiving information about the results of the control commands through one electronic appliance such as a personal computer or a television.

The home server controls the flow of signals exchanged through the network N, assigns unique logical addresses to the plurality of electronic appliances for identifying them on the network N, and constructs a database of network connection information for the plurality of electronic appliances.

If a home network is established using power line communication or wireless communication means, it is necessary to prevent the home network from being interfered with by nearby networks that are physically connected to the home network or within the coverage of the wireless network. To this end, the home server separates the network N from other networks to construct an exclusive network by assigning a home code to the electronic appliances belonging to its own network N. Also, the home server is typically equipped with communication capabilities that allow the user to connect to the Internet through the electronic appliances. The home server, therefore, is preferably built into an appliance that is powered all day long (e.g., refrigerator).

It is common that a home server is provided with an electronic appliance. Therefore, more than one home server may exist on a home network. Electronic appliances can be grouped according to function or location so that each home server manages one group of appliances. If the status or location of an appliance connected to the home network changes, the information on the change needs to be shared by all of the home servers; otherwise access to the appliance through the network may become unattainable.

### SUMMARY OF THE INVENTION

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

A network to which a plurality of devices are connected is provided. The network comprises a first managing device storing a profile about the network; and at least a second managing device storing a profile about the network, wherein if the profile stored in the first managing device is updated, the first managing device provides the updated profile to the second managing device so that the profiles of the first managing device and the second managing device become identical.

The first managing device is a device that monitors a status of client devices connected to the network, controls the client devices, and manages network information for communication with other networks. The second managing device is a device that monitors the status of client devices connected to the network, controls the client devices, and manages network information for communication with other networks. The profile stored in the first managing device is updated when a client device is connected. removed, or moved to another point in the network.

In accordance with one embodiment, the profile stored in the first managing device is updated when at least one of a network address is newly assigned to an arbitrary client device and a location address of an arbitrary client device changes. The first managing device transmits the updated profile to the second managing device, with a request for acknowledgement of a receipt of the updated profile.

The first managing device transmits the updated profile to the second managing device, without requesting an acknowledgement of a receipt of the updated profile. The first managing device transmits the updated profile, to the second managing device without requesting acknowledgement of the receipt of the updated profile if a network load is excessive or a number of second managing devices exceeds a predetermined number.

In another embodiment, the first managing device transmits the updated profile to a plurality of second managing devices. The updated profile comprises a command code and an address of a device connected to the network. The command code indicated at least one of addition, deletion, and modification of connection status of the device. The updated profile further comprises information about connection location of the device in the network.

In a certain embodiment, the first managing device comprises a managing unit for monitoring a communication status of the network and a connection status of devices connected to the network; a database for managing and storing the profile; and a control unit for updating the stored profile based on information received from the managing unit and providing the updated information to at least a second managing device.

A method of communicating management information from a first managing device connected to a network is provided in accordance with another aspect. The method comprises updating a first profile based on a change in connection status of a device to the network; and transmitting the updated information about the first profile to at least a second managing device to update a second profile stored in the second managing device.

The first managing device, in a preferred embodiment, performs at least one of monitoring the status of client devices connected to the network, controlling the client devices, and managing network information for communication with other networks. The second managing device performs at least one of monitoring a status of client devices connected to the network, controlling the client devices, and managing network information for communication with other networks.

The updated profile is transmitted to the second other managing device with a request for acknowledgement. The updated profile is transmitted to the second managing device, without a request for acknowledgement. The updated information is transmitted to a second managing device without requesting acknowledgement if network is load is excessive. Accordingly, the updated information is transmitted with requesting acknowledgment, when number of secondary managing devices connected to the network exceeds a threshold.

These and other embodiments of the present invention will also become readily apparent to those skilled in the art from the following detailed description of the embodiments having reference to the attached figures, the invention not being limited to any particular embodiments disclosed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

FIG. 1 illustrates a typical home network system established in a house;

FIG. 2 illustrates a home network system in accordance with one embodiment of invention;

FIG. 3 illustrates a detailed schematic diagram of a network manager and a master device belonging to the home network in FIG. 2;

FIGS. 4a through 4c illustrate exemplary packet structures for synchronizing network databases in accordance with one embodiment; and

FIG. 5 illustrates a flowchart of the method of synchronizing network databases in accordance with an embodiment of the present invention.

Features, elements, and aspects of the invention that are referenced by the same numerals in different figures represent the same, equivalent, or similar features, elements, or aspects in accordance with one or more embodiments of the system.

### DETAILED DESCRIPTION OF THE INVENTION

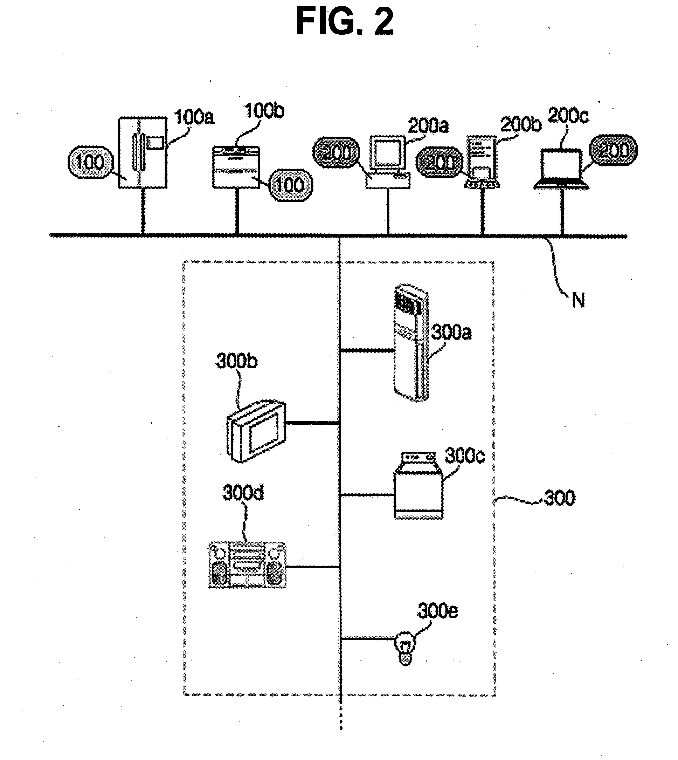

The home network system shown in FIG. 2, in accordance with one embodiment, comprises a plurality of client devices 300 that are connected to a network N. Electronic appliances 200a ~ 200c are equipped with a master device 200 that can monitor and control the plurality of client devices 300. Electronic devices 100a and 100b are equipped with a network manager 100 that has the function of managing the electronic devices connected to the network N as well as the functionality of the master device 200.

The plurality of client devices 300 are electronic devices or machines connected to the network N and controlled and monitored by the network manager 100 or the master device 200, for example. The master device 200 may be an electronic device or software that can monitor and control the electronic appliances 200 or devices 300 together with the network manager 100. The master device 200 can, for example, be installed or executed on a personal computer 200a, a personal digital assistant 200b, or a notebook computer 200c. If a client device is capable of monitoring and control, the client device can also be used as a master device.

The network manager 100 is a home server that controls signal exchanges and manages network information such as IP addresses for communication with external networks. In a preferred embodiment, the network manager 100 is built into a refrigerator 100a, for example, that is powered all day long. Another home server of the same functionality may be built into a copy machine 100b, for example.

When network information about the client devices 300 connected to the network N changes, the network manager 100 notifies other network managers and/or master devices of the change to synchronize management information databases. Also, the network manager 100 assigns a unique logical address to each of the devices on the network N. Network manager 1.00 constructs a network address comprising a 1-byte product code and a 1-byte logical address, for example, and monitors the connection status of the devices.

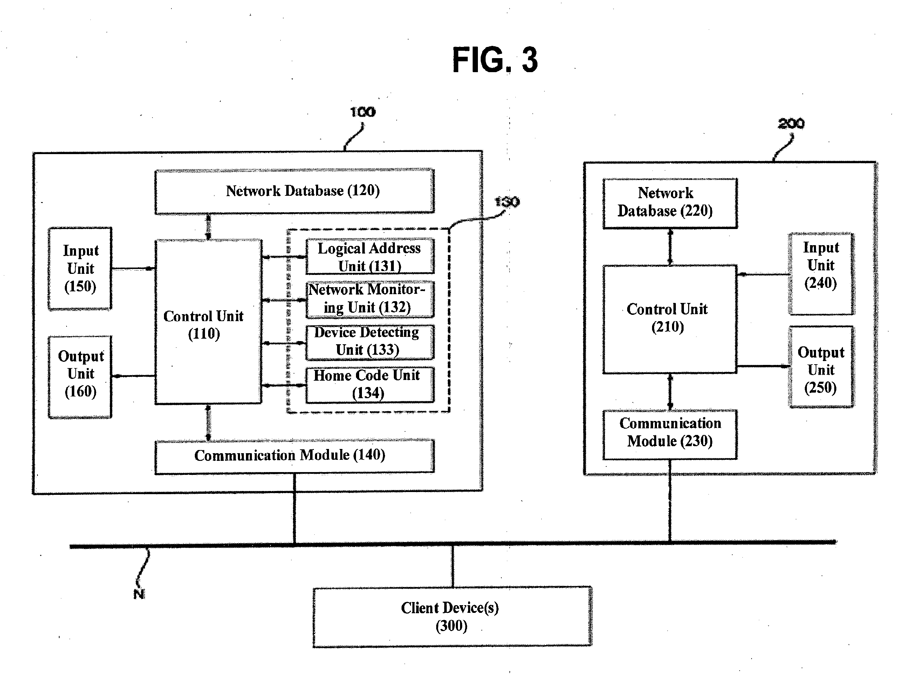

FIG. 3 is a detailed schematic diagram of the network manager 100 and the master device 200 in accordance with one embodiment. The network manager 100 comprises a network managing unit 130, a network database 120, a control unit 110, and a communication module 140. The network managing unit 130 monitors the status of other network managers, master devices, and/or client devices 300 connected to the network N and monitors the communication status such as the load of the network N. The network database 120 provides information regarding the network profile in a database. The control unit 110 processes data received from the network managing unit 130 and transmits the network profile to other network managers and/or master devices when the network profile is updated. The communication module 140 transmits and receives data so that the network manager 100 can communicate with other devices through the network N.

The network manager 100 may further comprise an input unit 150 for receiving control commands for the client devices 300 from a user and an output unit 160 for outputting status information about the network N and the client devices 300 in a user-recognizable format. An electronic device with no input and output units (e.g., a refrigerator with the built-in network manager 100) can be controlled and monitored through the master device 200 equipped with the input and output units. The network database 120 stores network information about the client appliances 300 and modify the network information in accordance with update information received through the network managing unit 130, for example.

The network managing unit 130 comprises a logical address unit 131 for assigning unique logical addresses to client devices 300 connected to the network N so that the client devices 300 can be identified on the network, a network monitoring unit 132 for monitoring the status of the network N, and a device detecting unit 133 for detecting the number of the other network managers and master devices connected to the network N, and a home code unit 134 for generating a home code for constructing an exclusive network.

Receiving an address assignment request message, the logical address unit 131 generates a logical address that is one greater than the last of the logical addresses that have been previously assigned so far with reference to a logical address table stored in the network database 120. Logical address unit 131 transmits the generated logical address to the device that transmitted the address assignment request message through the communication module 140. Receiving the logical address, the device sets its network address by combining its own product code and the received logical address. The control unit 110 requests the network database 120 to mark the transmitted logical address to an allocated address.

The network monitoring unit 132 monitors the connection status of the devices connected to the network N and the respective network information. When a new device is added to the network N or an existing device is removed from the network N, the change is detected by the network monitoring unit 132. Network monitoring unit 132 detects a change in the physical location of each of the client devices 300 because client devices 300 may be identified based on their physical locations on the home network.

The network address of a device may comprise, for example, a 1-byte product code and a 1-byte logical address. In an alternative embodiment, the network address may, for example, comprise a 1-byte product code and a 1-byte location address. The most significant bit (e.g. bit 7), of the product code indicates the type of address. For example, if the most significant bit of the product code is '1', it indicates that the following 1-byte data is a logical address: Otherwise, it indicates that the following 1-byte data is a location address. In certain embodiments, a unique location address is assigned to one or more locations in a house. For example, the living room may be assigned '0', the bedroom may be assigned '1', the kitchen may be assigned '2', and so on.

Because the network manager 100 or the master device 200 can control (e.g., power on/off) a plurality of devices located at the same place simultaneously based on the location address, the location address as well as the logical address of each of the electronic devices connected to the network N is recorded in the network profile. The location address of an electronic device is entered by the user through an arbitrary network manager. When the location of the electronic device changes and thus the location address thereof needs to be changed accordingly, the location address is modified manually by user input. When information recorded in the network database of a network manager is updated by such location address changes, the updated information is shared by the other network managers and/or master devices as provided below.

The network monitoring unit 132 monitors the status of the network N (e.g., network load) by monitoring signals exchanged through the network N and determines the method for transmitting synchronization packets, thereby allowing effective data communication over the network N. The device detecting unit 133 detects the number of databases that need to be synchronized when the network database 120 is updated (i.e., the number of network managers and master devices existing on the network with the option of excluding itself from that calculation).

The home code unit 134 generates a home code for separating the network N from other physically connected networks, sets the home code in the communication module 140, and lets the communication modules of the other devices. Because data communication is performed between communication modules having the same home code, the network N can become an exclusive network in one embodiment.

The control unit 110 enables centralized control of the client devices 200 and synchronization of network profiles and manages information databases by facilitating exchanges of appropriate control signals and data among the network managing unit 130, the network database 120, and the communication module 140.

Before transmitting a packet for database synchronization, the network manager 100 checks the communication status of the network N monitored by the network managing unit 130 and the number of the other network managers and master devices connected to the network N. If the network load is not excessive and the detected number is less than a predefined limit, the network manager 100 may transmit the synchronization packet to the other network managers and master devices using a one-to-one request method. According to the request method, a device that receives the synchronization packet may acknowledge its successful receipt of the packet.

If the communication load of the network N is high or the number of devices that need database synchronization exceeds the predefined limit, the network manager 100 may transmit the synchronization packet to the other network managers and master devices using a single cast or multicast or notification method. In one embodiment, a device that receives the synchronization packet may or may not acknowledge the receipt of the packet.

In a single cast notification, the logical address of the device to receive the synchronization packet is stored in the 1-byte logical address field following the product code (e.g., '00' for a network manager and '30' for a master device). In a multicast notification, 'FF' is stored in the logical address field, for example, in which case the packet is received by one or more devices of the same product code. Thus, if the product code is '00' and the logical address is 'FF, for example, the packet is received by a plurality of the network managers.

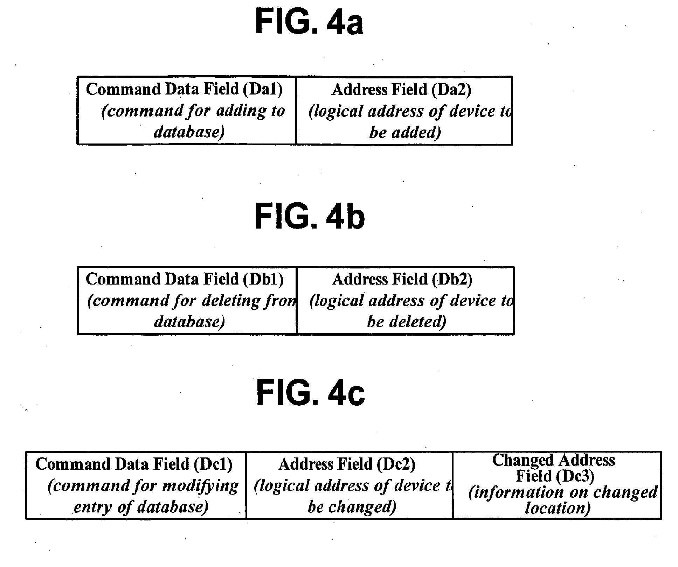

FIGS. 4a through 4c illustrate exemplary structures of the synchronization packet in accordance with preferred embodiments of the present invention. The packet structures comprise a command data field (e.g., Da1, Db1, or Dc1) in which a command code for adding, deleting, or modifying management information in response to a new connection is provided. The packet structure may also comprise an address field (e.g., Da2, Db2, Dc2) in which the logical address of the newly connected, deleted, or modified device is stored. The packet structure in FIG. 4c further comprises a changed address field (e.g., Dc3) in which modified network information (e.g., information on the changed location) is stored.

The changed address field Dc3 shown in FIG. 4c, by way of example, stores information on the new location of a device connected to the network N when the location changes. The location information can comprise string-formatted location name information (e.g., "living room", "kitchen", etc.) as well as the aforementioned location address. The location name information may be used for being displayed to the user.

The master device 200 comprises an input unit 240, an output unit 250, a communication module 230, a database 220, and a control unit 210. The input unit 240 allows the user to enter commands for monitoring and/or controlling the client devices 300. The output unit 250 outputs the status of the client devices 300 and the network in a format that can be recognized by the user. The communication module 230 transmits and receives data through the network N. The database 220 stores and updates management information for the network and the client devices based on information received from the network manager 100. The control unit 210 controls and monitors the client devices 300 according to the profile information stored in the database 220 and data communicated with the network manager 100 or other master devices.

Receiving the synchronization packet transmitted from the network manager 100, the control unit 210 of the master device 200 deciphers the packet and updates the database 220, thereby allowing the network profile of the network manager 100 and the master device 200 to be synchronized. In one embodiment, the control unit 210 transmits an acknowledgement message. Because the control unit 210 monitors or controls the client devices 300 based on the synchronized database, errors in the control or monitoring process do not occur.

The home network system in accordance with the present invention databases management information for electronic devices connected to the network N and updates the database when the addition, deletion, or modification of an electronic device occurs. If a change in the database of a network manager occurs, the network manager transmits a packet for synchronization to the other network managers or master devices, thereby effectively synchronizing the respective databases. Because the user controls or monitors a particular client device based on the synchronized database, errors in the control or monitoring process are prevented.

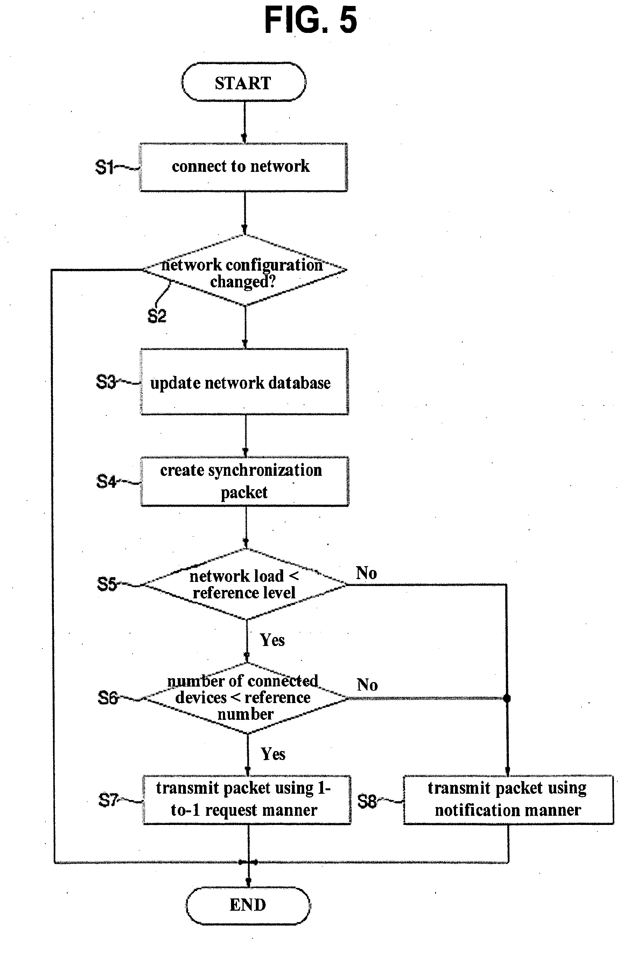

Referring to FIG. 5, in accordance with an embodiment, an arbitrary managing device, for example, a network manager is connected to a network established in a house (S1) and monitors a change in the network configuration (S2). If a new client device is connected to the network, the network manager assigns a logical address to the new client device and adds the logical address and network connection information about the client device to the network database. If a client device is removed from the network or a command for removing a client device from the network is entered by the user, the network manager removes the information about the client device from the network database. If the location of a client device changes and the connection information for the client device is modified by the user, the network manager updates the network database accordingly (S3).

When the database is updated by the addition, deletion, or modification of a device, the network manager constructs a packet for synchronization as shown in FIG. 4a through 4c to notify the other network managers and/or master devices of the database update (S4). The network manager then monitors the network status, i.e., the communication load of the network (S5). If the communication load is within a proper range, the network manager determines if the number of other network managers and master devices connected to the network is less than a predefined limit (S6).

If the communication load is within the proper range and the number of the other network managers and master devices is less than the predefined limit, the network manager transmits a synchronization packet to the other network managers and/or master devices using the multicast request method to notify a plurality of managing devices, for example (S7). If the communication load is excessive or the number of the other network managers and master devices exceeds the predefined limit, the network manager transmits a synchronization packet using singlecast notification method, for example, to notify a single managing device (S8).

A network manager or master device that receives the synchronization packet updates its own database according to the command code contained in the received synchronization packet. The home network system and method of synchronizing network management information in accordance with the present invention allows network profile information stored in network managers and master devices is always synchronized even though network profile changes due to addition, deletion, or modification of client devices, thereby allowing a user to control and monitor client devices through any network manager or master device.

The embodiments described above are to be considered in all aspects as illustrative only and not restrictive in any manner. Thus, other exemplary embodiments, system architectures, platforms, and implementations that can support various aspects of the invention may be utilized without departing from the essential characteristics described herein. These and various other adaptations and combinations of features of the embodiments disclosed are within the scope of the invention. The invention is defined by the claims and their full scope of equivalents.

## Claims

1. A network to which a plurality of devices are connected, comprising:
a first managing device storing a profile about the network; and
at least a second managing device storing a profile about the network,
wherein if the profile stored in the first managing device is updated, the first managing device provides the updated profile to the second managing device so that the profiles of the first managing device and the second managing device become identical.

2. The network set forth in claim 1, wherein the first managing device is a device that monitors at least one of a status of client devices connected to the network, the client devices, and network information for communication with other networks.

3. The network set forth in claim 1, wherein the second managing device is a device that monitors the status of client devices connected to the network, controls the client devices, and manages network information for communication with other networks.

4. The network set forth in claim 1, wherein the profile stored in the first managing device is updated when a client device is connected, removed, or moved to another point in the network.

5. The network set forth in claim 1, wherein the profile stored in the first managing device is updated when at least one of a network address is newly assigned to an arbitrary client device and a location address of an arbitrary client device changes.

6. The network set forth in claim 1, wherein the first managing device transmits the updated profile to the second managing device, with a request for acknowledgement of a receipt of the updated profile.

7. The network set forth in claim 1, wherein the first managing device transmits the updated profile to the second managing device, without requesting an acknowledgement of a receipt of the updated profile.

8. The network set forth in claim 7, wherein the first managing device transmits the updated profile to the second managing device without requesting acknowledgement of the receipt of the updated profile, if at least one of a network load is excessive and a number of second managing devices exceed a predetermined number.

9. The network system set forth in claim 1, wherein the first managing device transmits the updated profile to a plurality of second managing devices.

10. The network set forth in claim 1, wherein the updated profile comprises a command code and an address of a device connected to the network.

11. The network set forth in claim 10, wherein the command code indicated at least one of addition, deletion, and modification of connection status of the device.

12. The network set forth in claim 11, wherein the updated profile further comprises information about connection location of the device in the network.

13. The network set forth in claim 1, wherein the first managing device comprises:
a managing unit for monitoring a communication status of the network and a connection status of devices connected to the network;
a database for managing and storing the profile; and
a control unit for updating the stored profile based on information received from the managing unit and providing the updated information to at least a second managing device.

14. A method of communicating management information from a first managing device connected to a home network of appliances, the method comprising:
(a) updating a first profile based on a change in connection status of a device to the network; and
(b) transmitting the updated information about the first profile to at least a second managing device to update a second profile stored in the second managing device.

15. The method set forth in claim 14, wherein the first managing device performs at least one of monitoring the status of client devices connected to the network, controlling the client devices, and managing network information for communication with other networks.

16. The method set forth in claim 14, wherein the second managing device performs at least one of monitoring a status of client devices connected to the network, controlling the client devices, and managing network information for communication with other networks.

17. The method set forth in claim 14, wherein the updated profile is transmitted to the second other managing device with a request for acknowledgement.

18. The method set forth in claim 14, wherein the updated profile is transmitted to the second managing device, without a request for acknowledgement.

19. The method set forth in claim 14, wherein the updated information is transmitted to a second managing device without requesting acknowledgement if network's load is excessive.

20. The method of claim 14, wherein the updated information is transmitted with requesting acknowledgment, when number of secondary managing devices connected to the network exceeds a threshold.
